# EUROPEAN PATENT APPLICATION

(11) **EP 2 604 506 A1**
(43) Date of publication of application: **19.06.2013**
(21) Application number: 11816237.9
(22) Date of filing: 10.08.2011
(51) Int. Cl.: B63H 21/14, B63H 21/165, B63H 21/17, B63H 21/20, B63J 3/02, F01N 5/04, F02B 37/00, F02G 5/02, F02G 5/04

(54) **ENGINE SYSTEM AND SHIP**

(30) Priority: 29.11.2010 JP 2010265411; 10.08.2010 JP 2010179150
(71) Applicant: Kawasaki Jukogyo Kabushiki Kaisha, Kobe-shi, Hyogo 650-8670 (JP)
(72) Inventor: KUBO, Takashi, Hyogo 650-8670 (JP); NISHI, Seiji, Hyogo 650-8670 (JP)
(74) Representative: Leinweber & Zimmermann
(86) International application number: PCT/JP2011/004518
(87) International publication number: WO 2012/020568

(57) **Abstract**

A prime mover system (100) includes a prime mover (10), an auxiliary power device (30), and a coupling gear (40). A rotational speed of the rotary member (60) of the prime mover (10) is higher than a rotational speed of a crankshaft (50), or a shaft diameter of the rotary member (60) is smaller than a shaft diameter of the crankshaft (50), or the rotational speed of the rotary member is higher than the rotational speed of the crankshaft, and the shaft diameter of the rotary member is smaller than the shaft diameter of the crankshaft. A driving power generated in the auxiliary power device (30) is transmitted to the rotary member (60) via the coupling gear (40).

## Description

### Technical Field

The present invention relates to a prime mover system including an auxiliary power device.

### Background Art

An exemplary prime mover system for propulsive driving which is mounted in a large-sized marine vessel, which is one form of prime mover systems, is disclosed, in which an auxiliary power device is actuated by utilizing an exhaust gas emitted from an internal prime mover (low-speed diesel engine) or electric power generated in the marine vessel and is coupled to the prime mover to reduce a load placed on the prime mover (e.g., Patent Literature 1). Typically, in such a prime mover system, an output shaft of the auxiliary power device is coupled to a crankshaft of the prime mover via a coupling gear.

### Citation Lists

### Patent Literature

Patent Literature 1: Japanese Laid-Open Patent Application Publication No. 2006-242051

### Summary of the Invention

### Technical Problem

However, a rotational speed of the crankshaft of the above stated prime mover is, for example, about 100rpm, whereas a rotational speed of the auxiliary power device is, for example, about 30000rpm. Thus, there is a great difference in rotational speed between the crankshaft and the auxiliary power device. Because of this, it is required that the coupling gear couple the prime mover and the auxiliary power device together with a great reduction gear ratio. This results in a tendency that a size of the coupling gear increases. In addition, the crankshaft has a very great shaft diameter. This also causes an increase in the size of the coupling gear. With the increase in the size of the coupling gear, an energy loss generated in the coupling gear increases. In addition, there causes a need for a wide space in which the coupling gear is installed.

The present invention is directed to solving the above stated problem, and an object of the present invention is to provide a prime mover system which is capable of reducing the size of the coupling gear provided between the auxiliary power device and the prime mover.

### Solution to the Problem

According to an aspect of the present invention, there is provided a prime mover system comprising: a prime mover including a crankshaft and a rotary member rotated by a driving power of the crankshaft; an auxiliary power device for generating a driving power and supplying the generated driving power to the prime mover; and a coupling gear provided between the prime mover and the auxiliary power device and configured to transmit the driving power from the auxiliary power device to the prime mover; wherein a rotational speed of the rotary member is higher than a rotational speed of the crankshaft, or a shaft diameter of the rotary member is smaller than a shaft diameter of the crankshaft, or the rotational speed of the rotary member is higher than the rotational speed of the crankshaft, and the shaft diameter of the rotary member is smaller than the shaft diameter of the crankshaft; and wherein the driving power generated in the auxiliary power device is transmitted to the rotary member via the coupling gear.

In such a configuration, when the rotational speed of the rotary member is higher than the rotational speed of the crankshaft, the reduction gear ratio of the coupling gear can be reduced, and therefore the size of the coupling gear can be reduced. When the shaft diameter of the rotary member is smaller than the shaft diameter of the crankshaft, the size of the coupling gear can also be reduced.

### Advantageous Effects of the Invention

In accordance with the prime mover system of the present invention, the size of the coupling gear provided between the prime mover and the auxiliary power device can be reduced.

### Brief Description of the Drawings

[Fig. 1] Fig. 1 is a schematic view of a prime mover system according to Embodiment 1 of the present invention.
[Fig. 2] Fig. 2 is a schematic view of a prime mover system according to Embodiment 2 of the present invention.
[Fig. 3] Fig. 3 is a schematic view of a prime mover system according to Embodiment 3 of the present invention.
[Fig. 4] Fig. 4 is a schematic view of a prime mover system according to Embodiment 4 of the present invention.

### Description of the Embodiments

Hereinafter, embodiments of a prime mover system of the present invention will be described with reference to the drawings. Throughout the drawings, the same or corresponding components are designated by the same reference symbols and will not be described in repetition.

### (Embodiment 1)

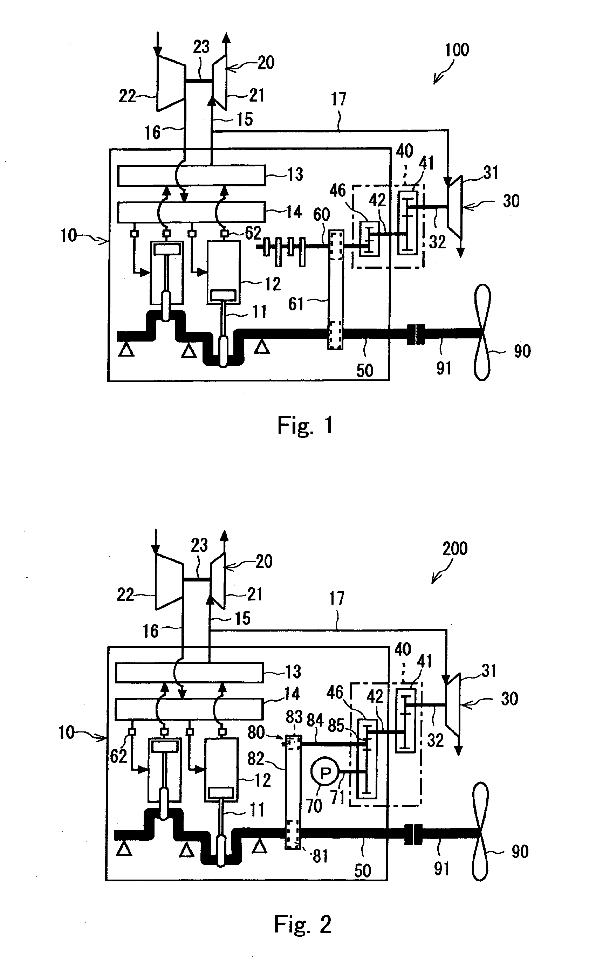

First of all, a configuration of a prime mover system 100 of Embodiment 1 of the present invention will be described with reference to Fig. 1. As shown in Fig. 1, the prime mover system 100 of the present embodiment is mounted in a marine vessel, and includes a prime mover 10, a turbocharger 20, an auxiliary power device 30, and a coupling gear 40. The prime mover 10 includes a crankshaft 50 and a camshaft 60. Hereinafter, these components will be described. Hereinafter, a gear which is a mechanical component will be referred to as "gear component" and is differentiated from "gear" which is a driving power transmission device.

The prime mover 10 is a primary device in the prime mover system 100. In the present embodiment, the prime mover 10 is basically configured to rotate a propeller shaft 91 attached with a propeller 90 at a tip end thereof. The prime mover 10 of the present embodiment is so-called a low-speed diesel engine. Main components of the prime mover 10 will be described later.

The crankshaft 50 is a member for outputting a driving power generated in the prime mover 10 to outside. The crankshaft 50 is coupled to a plurality of pistons 11 and actuated by a reciprocating motion of the pistons 11 which is caused by explosion of a fuel inside of cylinders 12. An exhaust gas is emitted from each of the cylinders 12 to an exhaust gas manifold 13. Scavenging air is supplied from a scavenging air manifold 14 to inside of the cylinders 12. Each of the exhaust gas manifold 13 and the scavenging air manifold 14 has a tank form. The crankshaft 50 of the present embodiment is coupled to the propeller shaft 91. A rotational speed of the crankshaft 50 becomes a rotational speed of the propeller 90. Because of this, the crankshaft 50 is configured to rotate at a rotational speed which is as low as about 100rpm so that the propeller 90 rotates at an optimal rotational speed.

The camshaft 60 is a member for controlling a valve in each of the cylinders 12 synchronously with the rotation of the crankshaft 50. As described above, the exhaust gas and the scavenging air flow into and out of the cylinders 12. ON-OFF valves 62 (control driving device) for controlling the flow of the exhaust gas and the scavenging air into and out of the cylinders 12 are actuated by the camshaft 60. The camshaft 60 is coupled to the crankshaft 50 via a driving power transmission device 61 such as a chain or the gear component and rotates at a rotational speed equal to the rotational speed of the crankshaft 50. The camshaft 60 has a smaller shaft diameter than the crankshaft 50. For example, when the shaft diameter of the camshaft 60 is about 300mm, the shaft diameter of the crankshaft 50 is about 850mm (note that the shaft diameter of the camshaft 60 and the shaft diameter of the crankshaft 50 change depending on a type of the prime mover 10).

The turbocharger 20 is a device for supplying compressed air to the prime mover 10. The turbocharger 20 includes a turbine section 21, a compressor section 22, and a shaft section 23. The turbine section 21 is supplied with the exhaust gas from the exhaust gas manifold 13 via an exhaust line 15. By a speed energy of the exhaust gas, the turbine section 21 rotates. The turbine section 21 and the compressor section 22 are coupled together via the shaft section 23. According to a rotation of the turbine section 21, the compressor section 22 rotates. According to the rotation of the compressor section 22, air taken in from outside is compressed, and the compressed air is supplied to the scavenging air manifold 14 via an air-intake line 16. The compressed air is supplied from inside of the scavenging air manifold 14 to inside of the cylinders 12. In this way, by supplying the air to inside of the cylinder 12 with a great amount, the fuel can be fed with a greater amount. As a result, a power output of the prime mover 10 can be increased.

The auxiliary power device 30 is a device which takes charge of a portion of the load placed on the prime mover 10 to reduce the load placed on the prime mover 10. The auxiliary power device 30 of the present embodiment is so-called a power turbine. The auxiliary power device 30 includes a turbine section 31 and an output shaft 32. The turbine section 31 is supplied with the exhaust gas from the exhaust gas manifold 13 of the prime mover 10 via the exhaust line 17. By a speed energy of the exhaust gas, the turbine section 31 rotates. According to the rotation of the turbine section 31, the output shaft 32 rotates. Through the output shaft 32, a driving power generated in the turbine section 31 is supplied to a coupling gear 40.

Unlike the above configuration, the turbocharger 20 may be configured as the auxiliary power device, for example, the power output may be taken out of the turbocharger 20. Nonetheless, like the present embodiment, it is desired that the power turbine as the auxiliary power device 30 be provided separately from the turbocharger 20. This is because by providing the auxiliary power device 30 independently of the turbocharger 20, a risk that the turbocharger 20 will be stopped due to a problem occurring in the auxiliary power device 30 can be lessened. For example, the prime mover 10 of the present embodiment is unable to be operated in a normal state unless the turbocharger 20 is operated normally. However, by providing the auxiliary power device 30 independently of the turbocharger 20, the operation of the prime mover 10 can be maintained even when the auxiliary power device 30 fails.

The coupling gear 40 is a device for transmitting the driving power generated in the auxiliary power device 30 to the prime mover 10. In the present embodiment, the coupling gear 40 includes a reduction gear 41 disposed outside of the prime mover 10 and an additional gear 46 disposed inside of the prime mover 10. The output shaft 32 of the auxiliary power device 30 is coupled to an input side of the reduction gear 41, while the additional gear 46 is coupled to an output side of the reduction gear 41. This allows the reduction gear 41 to reduce a speed of the driving power from the auxiliary power device 30 and supply the resulting driving power to the additional gear 46. An input side of the additional gear 46 is coupled to an output shaft 42 of the reduction gear 41, while an output side of the additional gear 46 is coupled to the camshaft 60. Through the additional gear 46, the driving power which is generated in the auxiliary power device 30 and input from the reduction gear 41 is supplied to the camshaft 60. Since the camshaft 60 is coupled to the crankshaft 50 via the driving power transmission device 61 such as the chain and the gear component, the driving power generated in the auxiliary power device 30 takes charge of a portion of the load placed one the prime mover 10 (crankshaft 50).

The configuration of the prime mover system 100 of the present embodiment has been described above. As described above, in the present embodiment, the coupling gear 40 is coupled to the crankshaft 50 via the camshaft 60 having a smaller diameter than the crankshaft 50, the size of the coupling gear 40 can be reduced in size as compared to a conventional configuration in which the coupling gear 40 is directly coupled to the crankshaft 50.

### (Embodiment 2)

Next, a prime mover system 200 according to Embodiment 2 of the present invention will be described with reference to Fig. 2. The prime mover system 200 of the present embodiment is different from the prime mover system 100 of Embodiment 1 in that the prime mover 10 in the prime mover system 200 of the present embodiment includes a hydraulic oil boosting pump 70 (control driving device) and a coupling mechanism 80 instead of the camshaft 60 (see Fig. 1) of Embodiment 1. Because of the difference, the coupling gear 40 of the present embodiment is different from that in the prime mover system 100. Hereinafter, these components will be described sequentially.

The hydraulic oil boosting pump 70 is a device for boosting (increasing) a pressure in a hydraulic oil for controlling the prime mover 10. In the prime mover system 100 of Embodiment 1, the on-off valve 62 of each of the cylinders 12 is actuated by the camshaft 60, whereas in the prime mover system 200 of the present embodiment, the on-off valve 62 is actuated by a hydraulic oil. Note that the hydraulic oil actuates a fuel pump (not shown) for supplying a fuel to inside of the cylinders 12. In some cases, a hydraulically-powered device which is not mounted in the prime mover 10, such as a pump within the marine vessel, may be actuated. In recent years, a prime mover system for a huge marine vessel which controls the prime mover 10 by the hydraulic oil instead of the camshaft has been increasing in number.

The coupling mechanism 80 is a mechanism for transmitting a driving power of the crankshaft 50 to the hydraulic oil boosting pump 70. The coupling mechanism 80 is constituted by a combination of a chain, sprockets, a rotary shaft, gear components, etc.. The coupling mechanism 80 is coupled at one end to the crankshaft 50 and at the other end to an input shaft 71 of the hydraulic oil boosting pump 70. This allows the coupling mechanism 80 to receive the driving power from the crankshaft 50, and transmit it to the hydraulic oil boosting pump 70, thereby rotating the hydraulic oil boosting pump 70. The combination of the chain, the sprockets, the rotary shaft, the gear component, etc., constituting the coupling mechanism 80 is not particularly limited. In the present embodiment, the crankshaft 50 is attached with a sprocket 81. A chain 82 is wrapped around the sprocket 81, which causes a sprocket 83 to be rotated. The rotated sprocket 83 causes a gear component 85 located at its opposite side to be rotated via the rotary shaft 84, and further actuates the input shaft 71 of the hydraulic oil boosting pump 70 via a plurality of gear components as necessary. In Fig. 2, although the sprocket 81 attached to the crankshaft 50 is positioned at the propeller shaft 91 side when viewed from the piston 11, it may be positioned at an opposite side of the propeller shaft 91 when viewed from the piston 11.

The coupling gear 40 of the present embodiment includes the reduction gear 41 and the additional gear 46 like Embodiment 1. The coupling gear 40 of the present embodiment has a feature that the gear component 85 constituting a portion of the coupling mechanism 80 constitutes a portion of the additional gear 46. Like the present embodiment, the gear component 85 constituting the coupling gear 40 need not be used only for the coupling gear 40 but may constitute a portion of a gear other than the coupling gear 40. The output shaft 42 of the reduction gear 41 is coupled to an input side (auxiliary power device 30 side) of the additional gear 46, while its output side (prime mover 10 side) is coupled to the rotary shaft 84 of the coupling mechanism 80. This allows the additional gear 46 to supply the driving power which is generated in the auxiliary power device 30 and input from the reduction gear 41, to the rotary shaft 84 of the coupling mechanism 80. Since the rotary shaft 84 is coupled to the crankshaft 50 via the chain 82, etc., the driving power generated in the auxiliary power device 30 takes charge of a portion of the load placed on the prime mover 10 (crankshaft 50).

The rotary shaft 84 of the coupling mechanism 80 has a smaller shaft diameter than the crankshaft 50. Because of this, in a case where the output side of the coupling gear 40 is coupled to the rotary shaft 84 of the coupling mechanism 80 like the present embodiment, a size of the additional gear 46 can be reduced and hence a size of the overall coupling gear 40 can be reduced, as compared to a conventional configuration in which the output side of the coupling gear 40 is coupled to the crankshaft 50. From another perspective view, since the additional gear 46 shares the gear component 85 with the coupling mechanism 80, the gear component 85 may be substantially omitted from the additional gear 46. Therefore, the size of the additional gear 46 can be reduced and hence the size of the overall coupling gear 40 can be reduced.

A rotational speed of the rotary shaft 84 of the coupling mechanism 80 is set lower than a rotational speed of the crankshaft 50. In the present embodiment, the number of teeth of the sprocket 81 attached to the crankshaft 50 is set more than the number of teeth of the sprocket 83 attached to the rotary shaft 84. Therefore, the rotational speed of the rotary shaft 84 of the coupling mechanism 80 is lower than the rotational speed of the crankshaft 50. Because of this, in a case where the output side of the coupling gear 40 is coupled to the rotary shaft 84 of the coupling mechanism 80 like the present embodiment, a reduction gear ratio of the reduction gear 41 can be reduced, as compared to a conventional configuration in which the output side of the coupling gear 40 is coupled to the crankshaft 50. Therefore, the size of the reduction gear 41 can be reduced, and hence the size of the overall coupling gear 40 can be reduced.

The prime mover system 200 of the present embodiment has been described above. When the coupling gear 40 is coupled to a rotary member actuated by the crankshaft 50 and having a smaller shaft diameter than the crankshaft 50, or a rotary member actuated by the crankshaft 50 and rotating at a higher speed than the crankshaft 50, for example, the rotary shaft 84 of the present embodiment, the size of the coupling gear 40 can be reduced. As the rotary member coupled to the coupling gear 40, the existing member (component) required to actuate the prime mover is preferably used. It is not necessary to provide the rotary member exclusively used to be connected to the coupling gear 40.

Although the coupling mechanism 80 of the present embodiment transmits the driving power of the crankshaft 50 to the hydraulic oil boosting pump 70, it may transmit the driving power generated in the crankshaft 50 to a device other than the hydraulic oil boosting pump 70. For example, in some cases, the prime mover 10 includes a lubricating oil boosting pump (control driving device) for boosting (increasing) a pressure of a lubricating oil required to actuate the prime mover 10. The coupling mechanism 80 of the present embodiment may transmit the driving power of the crankshaft 50 to this lubricating oil boosting pump.

### (Embodiment 3)

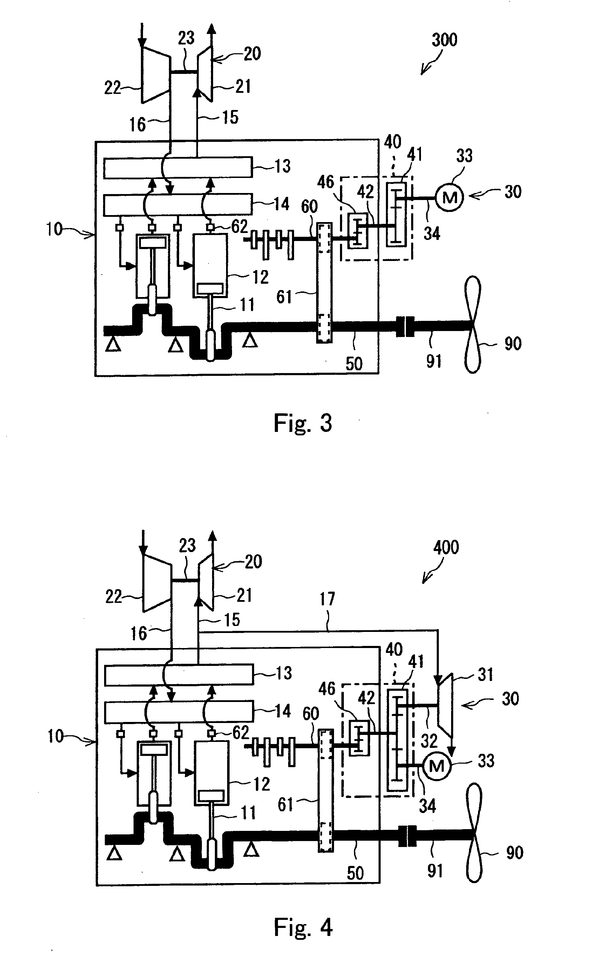

Next, a prime mover system 300 according to Embodiment 3 of the present invention will be described with reference to Fig. 3. The prime mover system 300 according to the present embodiment has basically the same configuration as that of prime mover system 100 according to Embodiment 1 except that the auxiliary power device 30 is an electric motor. This will be described specifically hereinafter.

As descried above, the auxiliary power device 30 of the present embodiment is the electric motor and includes an electric motor body 33 and an output shaft 34. The electric motor body 33 is actuated by electric power. The electric motor body 33 may be supplied with electric power generated by a generator mounted in the marine vessel separately from the prime mover 10, electric power generated by utilizing the energy of an exhaust gas of the prime mover 10, or electric power generated by a combination of these. In the case where the electric power is generated by utilizing energy of the exhaust gas, the exhaust gas may be directly taken out of the exhaust gas manifold 13, and a power generation turbine may be rotated by a kinetic energy of the exhaust gas to generate the electric power. Or, a steam may be generated by heat energy of the exhaust gas taken out of the turbocharger 20, and a steam turbine for power generation may be rotated to generate electric power. Or, the driving power may be taken out of the turbocharger 20 and may actuate the power generator to generate the electric power. The output shaft 34 is rotated according to the rotation of the electric motor body 33, and outputs the driving power generated in the electric motor body 33 to the coupling gear 40.

Like the prime mover system 300 of the present embodiment, in the case where the electric motor is used as the auxiliary power device 30, the size of the coupling gear 40 can be reduced by providing a configuration in which the driving power generated in the auxiliary power device 30 is transmitted to the rotary member (camshaft 60) having a smaller shaft diameter than the crankshaft 50 via the coupling gear 40. In the case where the electric power for actuating the electric motor body 33 is generated by the generator mounted in the marine vessel, surplus electric power can be utilized efficiently. In this case, the generator mounted in the marine vessel is not affected by an operating state of the prime mover. Therefore, it is possible to supply the driving power from the auxiliary power device 30 stably to the prime mover 10, irrespective of the operating state of the prime mover 10. In the case where the electric power for actuating the electric motor body 33 is generated by utilizing the energy of the exhaust gas, the exhaust gas of the prime mover 10 can be utilized efficiently. Therefore, the prime mover 10 can be operated efficiently.

### (Embodiment 4)

Next, a prime mover system 400 according to Embodiment 4 of the present invention will be described with reference to Fig. 4. The prime mover system 400 according to the present embodiment has basically the same configuration as that of the prime mover system 100 according to Embodiment 1 except that the auxiliary power device 30 includes a power turbine and an electric motor. This will be described specifically hereinafter.

As descried above, the auxiliary power device 30 of the present embodiment includes the power turbine and the electric motor. The auxiliary power device 30 includes the turbine section 31, the output shaft 32 coupled to the turbine section 31, the electric motor body 33, and the output shaft 34 coupled to the electric motor body 33, which are identical to the turbine section 31, the output shaft 32, the electric motor body 33, and the output shaft 34 described in Embodiment 1 or Embodiment 3. The output shaft 32 at the power turbine side is rotated according to the rotation of the turbine section 31, and outputs the driving power generated in the turbine section 31 to the coupling gear 40. The output shaft 34 at the electric motor body side is rotated according to the rotation of the electric motor body 33 and outputs the driving power generated in the electric motor body 33 to the coupling gear 40.

In the present embodiment, the turbine section 31 is supplied with the exhaust gas from the exhaust gas manifold 13 of the prime mover 10 via the exhaust line 17. The turbine section 31 is rotated by speed energy of the exhaust gas. The electric motor body 33 is supplied with electric power generated by the generator mounted in the marine vessel separately from the prime mover 10 and is rotated by the electric power.

Like the prime mover system 400 of the present embodiment, in the case where the auxiliary power device 30 includes the power turbine and the electric motor, the size of the coupling gear 40 can be reduced by providing a configuration in which the driving power generated in the auxiliary power device 30 is transmitted to the rotary member (camshaft 60) having a smaller shaft diameter than the crankshaft 50 via the coupling gear 40. In addition, in the prime mover system 400 of the present embodiment, the turbine section 31 is actuated by utilizing the exhaust gas, and thus the prime mover 10 is able to perform efficient operation. And, the electric motor body 33 is actuated by the electric power generated by the generator mounted in the marine vessel and thus surplus electric power can be utilized efficiently, and stable driving power can be supplied from the auxiliary power device 30 to the coupling gear 40 irrespective of a situation of the prime mover 10. That is, two advantages can be achieved simultaneously.

Although Embodiment 1 to Embodiment 4 of the present invention have been described with reference to the drawings, specific configuration is not limited to these embodiments. A design change or the like within a spirit of the invention is included in the present invention. Although the auxiliary power device 30 using the power turbine, the auxiliary power device 30 using the electric motor, and the auxiliary power device 30 using a combination of these have been described, the auxiliary power device is not limited to these. For example, the use of a hydraulic motor as the auxiliary power device, and the use of devices other than the above stated devices as the auxiliary power device 30 are included in the present invention.

Although the coupling gear 40 includes the reduction gear 41 and the additional gear 46 as described above, they may be integral with each other. Or, the reduction gear 41 may be omitted from the coupling gear if the reduction gear 41 is unnecessary. Although the additional gear 46 which is a portion of the coupling gear 40 is positioned inside of the prime mover 10, it is sufficient that the coupling gear 40 is positioned between the auxiliary power device 30 and the prime mover 10 in view of its function. That is, a specific position of the coupling gear 40 is not particularly limited.

The auxiliary power device 30 of Embodiment 3 is configured such that the power turbine in the auxiliary power device 30 of Embodiment 1 is replaced by the electric motor. The auxiliary power device 30 of Embodiment 4 is configured such that the auxiliary power device 30 of Embodiment 1 is added with the electric motor. Alternatively, a configuration in which the power turbine in the auxiliary power device 30 of Embodiment 2 is replaced by the electric motor, or a configuration in which the auxiliary power device 30 of Embodiment 2 is added with the electric motor, are included in the present invention.

Although cases where the prime mover systems 100, 200, 300 and 400 are mounted in the marine vessel have been described, prime mover systems in uses other than the use in which the prime mover system is mounted in the marine vessel is included in the present invention. For example, a prime mover system for actuating a generator may be included in the present invention.

### Industrial Applicability

In accordance with a prime mover system of the present invention, a size of a coupling gear provided between a prime mover and an auxiliary power device can be reduced. Therefore, the prime mover system of the present invention is useful in technical fields of a prime mover system including an auxiliary power device.

### Reference Signs Lists

10 prime mover
20 turbocharger
30 auxiliary power device
31 turbine section
33 electric motor body
40 coupling gear
50 crankshaft
60 camshaft (rotary member)
62 on-off valve (control driving device)
70 hydraulic oil boosting pump (control driving device)
80 coupling mechanism
84 rotary shaft (rotary member)
100, 200, 300, 400 prime mover system

## Claims

1. A prime mover system comprising:
a prime mover including a crankshaft and a rotary member rotated by a driving power of the crankshaft;
an auxiliary power device for generating a driving power and supplying the generated driving power to the prime mover; and
a coupling gear provided between the prime mover and the auxiliary power device and configured to transmit the driving power from the auxiliary power device to the prime mover;
wherein a rotational speed of the rotary member is higher than a rotational speed of the crankshaft, or a shaft diameter of the rotary member is smaller than a shaft diameter of the crankshaft, or
the rotational speed of the rotary member is higher than the rotational speed of the crankshaft, and the shaft diameter of the rotary member is smaller than the shaft diameter of the crankshaft; and
wherein the driving power generated in the auxiliary power device is transmitted to the rotary member via the coupling gear.

2. The prime mover system according to Claim 1,
wherein the prime mover includes a control driving device for controlling the prime mover; and
wherein the rotary member transmits a driving power from the crankshaft to the control driving device to actuate the control driving device.

3. The prime mover system according to Claim 2,
wherein the control driving device is a hydraulic oil boosting pump for boosting a pressure of a hydraulic oil for controlling a hydraulic device.

4. The prime mover system according to Claim 2,
wherein the control driving device is a lubricating oil boosting pump for boosting a pressure of a lubricating oil.

5. The prime mover system according to Claim 2,
wherein the control driving device is an on-off valve provided in a cylinder within the prime mover; and
wherein the rotary member is a camshaft for controlling the on-off valve.

6. The prime mover system according to any one of Claims 1 to 5,
wherein the auxiliary power device is actuated by utilizing energy of an exhaust gas of the prime mover.

7. The prime mover system according to any one of Claims 1 to 5,
wherein the auxiliary power device includes a power turbine rotated by an exhaust gas of the prime mover.

8. The prime mover system according to Claim 7, further comprising:
a turbocharger for supplying compressed air to the prime mover;
wherein the power turbine is provided independently of the turbocharger.

9. The prime mover system according to any one of Claims 1 to 5,
wherein the auxiliary power device includes an electric motor actuated by electric power generated by a generator mounted in the marine vessel separately from the prime mover.

10. The prime mover system according to any one of Claims 1 to 5,
wherein the auxiliary power device includes an electric motor actuated by electric power generated by energy of the exhaust gas of the prime mover.

11. The prime mover system according to any one of Claims 1 to 5,
wherein the auxiliary power device includes a power turbine rotated by an exhaust gas of the prime mover and an electric motor actuated by electric power generated by a generator mounted in the marine vessel separately from the prime mover.

12. A marine vessel comprising the prime mover system according to any one of Claims 1 to 11.
